# EUROPEAN PATENT APPLICATION

(11) **EP 2 450 608 A1**
(43) Date of publication of application: **09.05.2012**
(21) Application number: 12153855.7
(22) Date of filing: 13.06.2008
(51) Int. Cl.: F16L 11/12, F16L 11/16, E21B 17/20, E21B 17/01, E21B 47/12, E21B 47/00

(54) **Method of monitoring fluid flow within a flexible pipe**

(30) Priority: 26.11.2007 US 990129 P
(62) Divisional of application: 08158219.9
(71) Applicant: Schlumberger Holdings Limited, Road Town, Tortola (VG)
(72) Inventor: Roberts, Richard Damon Goodman, Southamptom, Hampshire S031 4RA (GB); Vannuffelen, Stephane, Southamptom, Hampshire SO31 4RA (GB); Smith, Russell, Southamptom, Hampshire SO31 4RA (GB)
(74) Representative: Molony, Anna

(57) **Abstract**

A method of monitoring fluid flow within a flexible pipe 50 comprises providing an optical fibre sensor 52 along the flexible pipe, within a pressure armour layer 51 of the pipe. The optical fibre is adapted for distributed or semi-distributed strain measurement and is configured within the pressure armour for hoop strain measurement. The method comprises operating the pipe within the elastic limit of the pressure armour layer, and optically interrogating the optical fibre sensor to determine the hoop strain at a plurality of locations along the optical fibre sensor. The hoop strain measurements are converted into corresponding internal fluid pressure values.

## Description

This invention relates to a method of monitoring fluid flow within a flexible pipe.

Flexible pipes are used as umbilical lines, risers, flow lines and offload lines in offshore hydrocarbon production. The complexity of the flexible pipes used in offshore oil and gas production is increasing in order to satisfy the many requirements of such pipes in terms of thermal behaviour, geometry, multiple fluid flows, flexibility and mechanical characteristics. Flexible pipes typically comprise at least a polymer inner liner which provides fluid isolation and a tension armour layer, provided around the liner, which provides protection against axial tensile stresses applied to the pipe. When further strength is required flexible pipes generally additionally comprise one or more additional layers, namely: a flexible carcass layer provided inside the inner liner and which defines a bore for receiving production components and prevents collapse of the inner liner; a pressure vault (or pressure armour) layer provided between the inner liner and the tension armour layer which gives the pipe additional strength against internal pressure and radial loads; additional tension armour layers; and a polymer outer sheath which provides environmental protection for the structural layers of the pipe.

Although the flexibility of the pipes helps to reduce stresses due to movement, they are susceptible to deterioration and/or rupture during transport, deployment and operation. It is therefore desirable to monitor the structural integrity of flexible pipes to prevent failure due to fatigue, corrosion, erosion or blockage due to deposition of parts of the flow components moving through the pipes.

According to an aspect of the invention there is provided a method of monitoring fluid flow within a flexible pipe, the method comprising:
providing an optical fibre sensor along the flexible pipe, within a pressure armour layer of the pipe, the optical fibre being adapted for distributed or semi-distributed strain measurement and being configured within the pressure armour for hoop strain measurement;
operating the pipe within the elastic limit of the pressure armour layer;
optically interrogating the optical fibre sensor to determine the hoop strain at a plurality of locations along the optical fibre sensor; and
converting the hoop strain measurements into corresponding internal fluid pressure values.

If the pipe is operated within the elastic limit of the pressure armour layer, the hoop strain measured by the optical fibre sensor is proportional to the difference in pressure between the bore of the flexible pipe (containing the high pressure production fluid) and the annulus of the pipe (filled with air or gas close to atmospheric pressure). A distributed or semi-distributed hoop strain measurement therefore provides a distributed measurement of the pressure distribution within the flexible pipe, and enables the fluid flow within the pipe to be monitored.

The optical fibre sensor may comprise an optical fibre adapted for distributed sensing by Brillouin scattering. The optical fibre sensor may alternatively comprise an optical fibre having an array of fibre grating sensors provided therein, the optical fibre sensor thereby being adapted for semi-distributed strain sensing. The fibre grating sensors are preferably fibre Bragg gratings.

The optical fibre sensor may additionally be adapted for distributed temperature sensing, the optical fibre sensor preferably being adapted for distributed temperature sensing by Brillouin scattering or Rayleigh scattering measurement. The optical fibre sensor is preferably adapted for simultaneous temperature and strain sensing.

The method preferably further comprises, during normal operation of the pipe or during operational shut-down, comparing measured pressure and temperature values to reference pressure and temperature operating envelope values.

The formation of blockages within a pipe can thereby be detected and located, as a non-linear pressure variation along a section of pipe. Phase separation of fluid within the pipe during shut-down may be monitored to ensure that a production system may be shut-down safely without formation and deposition of solids within the fluid. The fluid condition can be monitored during normal operation and kept within operating pressure and temperature boundaries.

The method may further comprise providing a heater at one or more locations along the pipe and operating the or each heater in response to the measured pressure and temperature values in order to maintain the fluid pressure and temperature within the operating envelope values.

The method may alternatively or additionally comprise providing chemical injection apparatus at one or more locations long the pipe and injecting a selected chemical at a selected location in response to the measured pressure and temperature values in order to maintain the fluid pressure and temperature within the operating envelope values.

An embodiment of the invention will now be described in detail, by way of example only, with reference to the accompanying drawings, in which:
Figure 1 is a cross-sectional view and a side view of a first flexible pipe with which a method of an embodiment of the invention of monitoring fluid flow within a flexible pipe may be used; and
Figure 2 is a part-cut-away view of a second flexible pipe with which the method of an embodiment of the invention of monitoring fluid flow within a flexible pipe may be used.

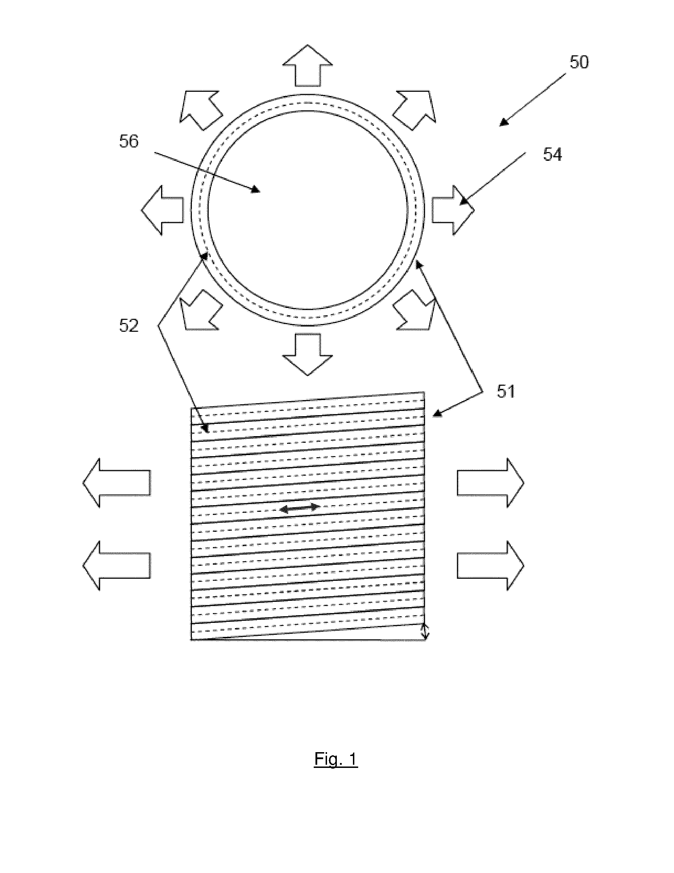

An embodiment of the invention provides a method of monitoring fluid flow within a flexible pipe 50, as shown in Figure 1.

The flexible pipe 50 comprises a pressure armour layer 51. Optical fibres 52 adapted for distributed strain sensing are coupled to the pressure armour layer 51. The pressure armour 51 consists of one or several wires continuously wound with a very tight pitch around an internal bore 56 of the pipe. The pressure armour wire/s absorbs the stress generated by the fluid pressure (indicated by arrows 54) inside the pipe 50.

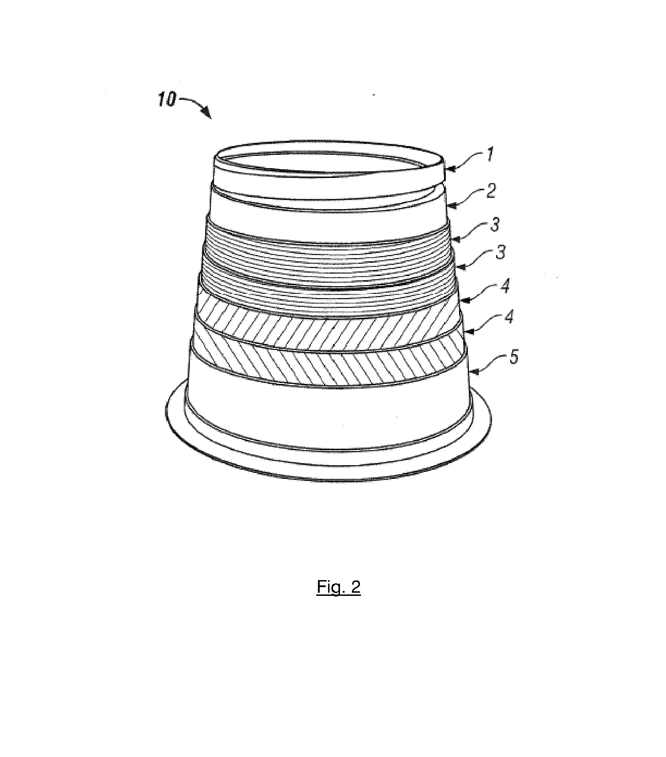

In this example, the flexible pipe 50 is only provided with a pressure armour layer 51 around the internal bore 56, but it will be appreciated that the method may also be used with a more complex flexible pipe 10, such as that shown in Figure 2, in which in which the pressure armour 3 is located between an inner liner 2 and a tension armour 4. The flexible pipe 10 comprises a flexible carcass 1, a polymer inner liner 2, a pressure armour (or pressure vault) 3, tension armour layers 4, a polymer outer sheath 5, and a sensing assembly 6.

It will be appreciated that optical fibres adapted for semi-distributed or multi-point strain sensing, such as fibres provided with arrays of fibre Bragg gratings, may be used in place of the distributed strain sensing fibres 52.

The method comprises providing an optical fibre sensor 52 along the flexible pipe 50, within the pressure armour layer 51 of the pipe. The optical fibre 52 is adapted for distributed or semi-distributed strain measurement and is configured within the pressure armour for hoop strain measurement. The method comprises operating the pipe 50 within the elastic limit of the pressure armour layer 51, and optically interrogating the optical fibre sensor 52 to determine the hoop strain at a plurality of locations along the optical fibre sensor. The hoop strain measurements are converted into corresponding internal fluid pressure values.

Due to their wiring configuration with a very tight pitch, pressure armour wires are mostly sensitive to the hoop strain generated by the fluid pressure of the production fluid flowing through the internal bore 56 of the pipe 50. These wires are essentially decoupled from the effect of torsion or tension that may be applied on the pipe 50.

Therefore semi-distributed / distributed strain measurement along the pressure armour wire will give direct information on the fluid pressure inside the pipe 50. The pressure armour 3, 51 provides pipe structural integrity between the bore 56 (containing the high pressure production fluid) and the annulus (filled with air or gas close to atmospheric pressure). Therefore, any pressure armour deformation is mostly due to the hoop stress generated by the fluid pressure. By operating the pipe 50 within the elastic domain (limit) of the pressure armour 3, 51, the hoop strain generated within the pressure armour is proportional to the difference in pressure between the bore 56 and the annulus. Therefore a distributed or semi-distributed strain measurement leads to a distributed measurement of the pressure distribution within the pipe 50.

Fluid pressure distribution is a very important parameter in terms of optimization of the production process in subsea oil and gas facilities. The fluid pressure changes drastically as the fluid travels from the seabed to the surface. Changes in fluid pressure and temperature can lead to significant flow assurance problems with wax, asphaltene or hydrate deposits forming in the pipe 50 and leading to blockages in the pipe. Therefore the ability to simultaneously estimate temperature and pressure variation along the pipe is critical. It can be especially important during operation shut-down when a lot of flow assurance problems can happen.

The method can therefore be used to detect and locate blockages in the pipe 50. In normal operating conditions, the fluid pressure will decrease as it goes up the pipe 50, towards the surface. The variation in pressure is generally linear. A deposit building up in the pipe will create a local restriction within the pipe bore 56. If left untreated, this restriction could completely block the production flow. However, as the blockage grows up, decreasing the available cross section for the fluid, a pressure difference will arise across the blockage, causing the diameter of the pipe 50 to change.

The optical fibre sensors 52 in the flexible pipe 50 can therefore be used to detect the formation and location of such blockages as they form, by sensing the pipe diameter variation due to increases in fluid pressure, through changes in hoop strain.

The method can also be used to monitor fluid movement within the flexible pipe 50 during installation shut-down. Fluid produced by an oil well is usually multiflow (gas, oil and water). Oil, gas and water have significantly different densities, and thus different pressures within the pipe. Therefore, when a subsea installation is shut-down the different phases in the vertical section of the pipe 50 will segregate with the gas phase on top, followed by the oil phase and the water column at the bottom. The optical fibre sensors 52 of the flexible pipe 50 enable continuous monitoring of the hoop strain along the pipe 50, enabling evaluation of the way the 3 phases are segregating within the pipe during the shutdown process.

The method also provides for the use of the distributed pressure (hoop strain) measurement along the flexible pipe 50 to carry out flow assurance management during installation shut down. As explained before, as fluid pressure changes, hydrate, wax or asphaltene phase can start forming. Fluid properties are usually extensively studied during the exploration phase using PVT composition analysis. The primary goal of fluid properties study is to establish phase diagrams. These phase diagrams establish the phase boundaries of the fluid. It defines the fluid phase condition as a function of pressure and temperature. Based on these diagrams, an operator can determine the pressure and temperature envelope within which the production system can operate safely without solid phase deposition in the pipe 50.

The optical fibre sensors 52 in the pressure armour 3, 51 can be adapted for both hoop strain and temperature measurement, to thereby enable a simultaneous distributed measurement of fluid temperature and pressure variation during installation shut-down. As explained before, as the installation is shut-down, the fluid will experience strong pressure and temperature variation. Pressure variations are due to phase segregation when the flow stops. The installation will also tend to cool down, leading to a temperature decrease of the fluid inside the pipe 50.

Therefore, by enabling measurement of distributed pressure and temperature, the method provides critical information for the management of flow assurance issues and keep the fluid condition within operating boundaries. Subsea pipes can also include heater sections, and the optical fibre sensors 52 in the flexible pipe 50 can be used to monitor the temperature and allow optimization of the heating power used in the heaters to maintain the fluid condition just above the critical boundary. If the heater section includes individual heaters, each can be individually managed. From an economical standpoint this enables power consumption to be optimized, thus minimizing exploitation costs.

The method further provides for the distributed temperature and pressure (hoop strain) measurements from the optical fibre sensors 52 within the flexible pipe 50 to be correlated in real-time with the phase diagram information to check that the system operating pressure and temperature is within the predefined operating envelope during normal operation or during a shut-down.

Under normal operating conditions, the measurements can be used to optimize production conditions. For example, the oil and gas industry is pumping a lot of chemical as solid deposit inhibitors (for example methanol against hydrate formation). The method also enables a more optimized injection plan by localizing the pipe areas with potential problems. Local chemical treatment can therefore be applied, which would reduce the amount of chemical pumped.

The pressure (hoop strain) measurements available from the optical fibre sensors 52 in the flexible pipe 50 also enable the detection and monitoring of slug formation within the production fluid.

The hoop strain measurements can also be used for pipe cross section estimation. Pipe cross section can be important to detect damage in the pipe internal structure. A non damaged flexible pipe is a symmetrical structure relatively to its main axis. Therefore, the pipe cross section is expected to be circular. Any damage in the pipe structure will generate a non-symmetrical configuration, leading to an ovalization of the pipe. Therefore localization and quantification of this ovalization can lead to useful information on the pipe condition.

Various modifications may be made to the described embodiments, as follows. Where the optical fibre sensors are described as distributed strain or temperature sensors they may alternatively comprise semi-distributed or point strain or temperature sensors comprising an array of fibre gratings, such as fibre Bragg gratings, provided within an optical fibre. Where the optical fibre sensors are described as being helically wound around the pipe, they may be wound with a different pitch to that described, and the pitch may vary along the length of the pipe. In addition, where the optical fibre sensors are described as being helically wound they may comprise helically wound sensing sections interconnected by relatively straight sections of optical fibre. Where the optical fibre sensors are described as being of axial strain or torsion, the optical fibre sensors may be arranged generally straight along the axial length of the pipe or they may be helically wound. A different number and configuration of optical fibre sensors may be provided to that described.

## Claims

1. A method of monitoring fluid flow within a flexible pipe, the method comprising:
providing an optical fibre sensor along the flexible pipe, within a pressure armour layer of the pipe, the optical fibre being adapted for distributed or semi-distributed strain measurement and being configured within the pressure armour for hoop strain measurement;
operating the pipe within the elastic limit of the pressure armour layer;
optically interrogating the optical fibre sensor to determine the hoop strain at a plurality of locations along the optical fibre sensor; and
converting the hoop strain measurements into corresponding internal fluid pressure values.

2. A method of monitoring fluid flow as claimed in claim 1, wherein the optical fibre sensor comprises an optical fibre adapted for distributed sensing by Brillouin scattering.

3. A method of monitoring fluid flow as claimed in claim 1, wherein the optical fibre sensor comprises an optical fibre having an array of fibre grating sensors provided therein.

4. A method of monitoring fluid flow as claimed in claims 2 or 3, wherein the optical fibre sensor is additionally adapted for distributed temperature sensing, the optical fibre sensor preferably being adapted for distributed temperature sensing by Brillouin scattering or Rayleigh scattering measurement.

5. A method of monitoring fluid flow as claimed in claim 4, wherein the optical fibre sensor is adapted for simultaneous temperature and strain sensing.

6. A method of monitoring fluid flow as claimed in any of claims 1 to 5, wherein the method further comprises, during normal operation of the pipe or during operational shut-down, comparing measured pressure and temperature values to reference pressure and temperature operating envelope values.

7. A method of monitoring fluid flow as claimed in claim 6, wherein the method further comprises providing a heater at one or more locations along the pipe and operating the or each heater in response to the measured pressure and temperature values in order to maintain the fluid pressure and temperature within the operating envelope values.

8. A method of monitoring fluid flow as claimed in claims 6 or 7, wherein the method further comprises providing chemical injection apparatus at one or more locations long the pipe and injecting a selected chemical at a selected location in response to the measured pressure and temperature values in order to maintain the fluid pressure and temperature within the operating envelope values.
